# EUROPEAN PATENT SPECIFICATION

(11) **EP 1 593 278 B1**
(45) Date of publication and mention of the grant of the patent: **01.08.2012**
(21) Application number: 03781037.1
(22) Date of filing: 29.12.2003
(51) Int. Cl.: H04W 12/06, H04W 88/02

(54) **METHOD FOR PROCESSING SECURITY MESSAGE IN MOBILE COMMUNICATION SYSTEM**
VERFAHREN ZUR VERARBEITUNG EINER SICHERHEITSNACHRICHT IN EINEM MOBILEN KOMMUNIKATIONSSYSTEM
PROCEDE DE TRAITEMENT D'UN MESSAGE DE SECURITE DANS UN SYSTEME DE COMMUNICATION MOBILE

(30) Priority: 11.02.2003 KR 2003008512
(43) Date of publication of application: 09.11.2005
(73) Proprietor: LG ELECTRONICS INC., Youngdungpo-gu Seoul 150-721 (KR)
(72) Inventor: CHUN, Sung Duck, Gwanak-gu, 151-891 Seoul (KR); YI, Seung June, Gangnam-gu, 135-940 Seoul (KR); LEE, Young Dae, Hanam-si, 465-711 Gyeonggi-do (KR)
(74) Representative: ter Meer, Nicolaus
(86) International application number: PCT/KR2003/002877
(87) International publication number: WO 2004/073347

(56) References cited:
- EP-A2- 0 977 452
- WO-A1-02/45453
- 'Technical specification group services and system aspects;3G security;security architecture(release5)' 3RD GENERATION PARTNERSHIP PROJECT, [Online] June 2002, pages 1 - 47, XP002990496 Retrieved from the Internet: <URL:http://www.3gpp.org/ftp/Specs/archive/ 33_series/33.102/33102-500.zip> [retrieved on 2004-03-10]

## Description

### Technical Field

The present invention relates to a message processing method applied to mobile communication, and more particularly, to a method for processing a security message in a RRC layer.

### Background Art

UMTS (universal mobile telecommunications system) includes UE (user equipment), UTRAN (UMTS terrestrial radio access network), and CN (core network). Moreover, the UTRAN comprises a plurality of RNSs (radio network subsystems). Each of the RNS comprises RNC (radio network controller) and a plurality of Node Bs managed by the RNC. A Node B receives uplink signals transmitted from UE and transmits downlink signals to the UE. The RNC takes charge of allocation and management of radio resource, and plays a role of an access point to connect the Node Bs to the CN. Each UE connected to the UMTS is managed by a specific RNC in the UTRAN, and the specific RNC is called SRNC (serving RNC).

The UTRAN configures, maintains, and manages RABs (radio access bearers) for the communications between the UE and the CN. The CN applies end-to-end QoS (quality of service) requirements to the RAB, and the RAB supports QoS requirements set up by the CN. The UTRAN therefore configures, maintains, and manages the RAB, thereby enabling to meet the end-to-end QoS requirements.

A radio interface protocol vertically comprises a physical layer, a data link layer, and a network layer and horizontally comprises a user plane for providing data information and a control plane for providing signaling. The protocol layers are grouped into L1 (layer 1), L2 (layer 2), and L3 (layer 3) based on three lower layers of an OSI (open system interconnection) reference model. The L1 provides upper layers with information transfer service using various radio transmission techniques. And, the L1 is connected to a MAC (medium access control) layer of the upper layers via transport channels.

A RLC layer supports data transmission reliably and carries out segmentation and concatenation on RLC SDUs (service data units) transferred from the upper layers. The RLC SDUs transferred from the upper layers are divided into RLC data units that can be processed in the RLC layer, and header information is added to the divided RLC data units to transfer to the MAC layer as a form of PDU (protocol data unit).

A PDCP (packet data convergence protocol) layer is disposed over the RLC layer. The PDCP layer makes data, which is transferred through the network protocol, be transmitted efficiently over a radio interface of which bandwidth is relatively narrow. A BMC (broadcast/multicast control) layer schedules UEs to which a CB (cell broadcast) message transferred from the CN will be transmitted, and transfers the CB message to the corresponding UEs located in specific cell(s) on the basis of the scheduling.

On request from higher layers, A RRC (radio resource control) layer controls transport and physical channels to perform the establishment, reconfiguration, and release of RBs (radio bearers). In this case, the RB means a service provided by the L2 for data transfer between the UE and UTRAN.

Meanwhile, various channels for receiving/transmitting data are defined between the UEs and the UTRAN to use. Data are sent and received between the PHY layer of UE and that of the UTRAN using the physical channel. In addition to physical channel, data transport paths between the protocol layers are defined as transport and logical channels in the radio access network of the UMTS. The logical channels are provided for data exchange between the RLC and MAC layer, while the transport channels are provided for data exchange between the MAC and PHY layer. Mapping between transport channels is performed in the MAC layer, while another mapping between the transport and physical layers is performed in the physical layer.

Various kinds of messages are received/transmitted between the terminal and UTRAN. 'Security check' is mostly carried out to protect data contained in the messages. Such 'security check' includes 'ciphering' and 'integrity check'. The ciphering adds a specific mask, which is known to both of transmitting and receiving parties only, to a message so that a third party failing to know the mask is unable to recognize the contents of the message.

And, the integrity check is used for checking whether an unauthorized third party has altered the contents of the message or whether the transmission is made by an unauthenticated party. Namely, the integrity check is performed for integrity protection and is a procedure required for checking whether the contents of the received message are intentionally and previously changed by the third party.

In the UMTS, the ciphering and the integrity check are simultaneously carried out on most of the messages transferred to the RRC layer and most of the control messages transmitted to the upper layers of the RRC layer. And, the ciphering is carried out on other general user data only. Such integrity check can be carried out in the RRC layer.

Thus, if the message of which contents are changed by the third party between the transmitting and receiving parties is received, or in order to filter a message transmitted from the unauthenticated transmitting party, the receiving party carries out the integrity check on the received message. Hence, the received message is normally processed or discarded according to whether the received message passes the integrity check or not.

For instance, one of the received messages may be a security setup control message. In connection between the UE and the network (ex. UTRAN), the security setup control message is used for initiating to secure messages that will be transmitted thereafter. Moreover, the security setup control message can be used for controlling security-relating environment variables that are used for the connection on which the security process has been carried out.

Information, which is related to controlling the security-relating environment variables, among the contents contained in the security setup control message is called security-relating environment setup information. Yet, the security-relating information contained in the security setup control message itself can be changed by the unauthenticated third party or can be transmitted by the unauthenticated transmitting party, whereby it is unable to rely on such security-relating information.

Document 3GPP TS 33.102 V5.0.9 (2002-6) describes a security mode set-up procedure for ciphering and integrity protection. The serving base station generates a security message indicating which key set for ciphering and integrity should be used. Moreover, the serving base station generates message or authentication code and attaches this code to the message. After receiving the message including the message authentication code for integrity, the mobile station computes a value on the message and verifies the integrity of the message by comparing the received authentication code with a generated authentication code. If the controls are successful, the mobile station processes the security message. In case the control is not successful, the procedure ends in the mobile station.

WO 02/45453 A1 describes a system for ensuring encrypted communication after handover. After receiving an initial message from the mobile station, sent to a radio network controller, the RNC requests from the core network a security code command message, which is received from the core network in the RNC, wherein the RNC computes a authentication code for integrity and sends the security mode command message to the mobile station, wherein the mobile station computes an authentication code for integrity, wherein the connection is released, if the authentication code received from the RNC is different than the calculated authentication code of the mobile station or the connection is accepted, if both codes are the same.

EP 0 977 452 A2 describes a method for updating a secret shared data in a wireless communication system, wherein a network outputs a first random number and a second party (a mobile) generates a second random number in response to a first challenge including the first random number. The mobile generates a first challenge response by forming a keyed cryptographic function on the first challenge and the second random number using a secondary key, which is not the security data derived from a root key. Then the mobile transfers the second random number as a second challenge and the first challenge response to the network, wherein the network verifies the mobile based on first and second challenges and the first challenge response and generates a second challenge response.

### Disclosure of invention

Accordingly, the present invention is directed to a method for processing a security message in mobile communication system that substantially obviates one or more problems due to limitations and disadvantages of the related art.

An object of the present invention is to provide a security setup control message processing method including security check of a security message itself.

The objects are solved by the features of the independent claims.

The present invention is characterized in that the security check of the security message itself is performed to secure integrity protection.

It is to be understood that both the foregoing general description and the following detailed description of the present invention are exemplary and explanatory and are intended to provide further explanation of the invention as claimed.

### Brief Description of Drawings

The accompanying drawings, which are included to provide a further understanding of the invention and are incorporated in and constitute a part of this application, illustrate embodiment(s) of the invention and together with the description serve to explain the principle of the invention. In the drawings:
FIG. 1 illustrates a flowchart of a general message processing method;
FIG. 2 illustrates a flowchart of a method for processing a security setup control message according to a first embodiment of the present invention;
FIG. 3 illustrates a flowchart of a method for processing a security setup control message according to a second embodiment of the present invention;
FIG. 4 illustrates a diagram of one embodiment representing COUNT-1 in security-relating environment variables; and
FIG. 5 illustrates a diagram for explaining one embodiment of generating an authentication value in integrity check.

### Best Mode for Carrying out the Invention

Reference will now be made in detail to the preferred embodiments of the present invention, examples of which are illustrated in the accompanying drawings. Wherever possible, the same reference numbers will be used throughout the drawings to refer to the same or like parts.

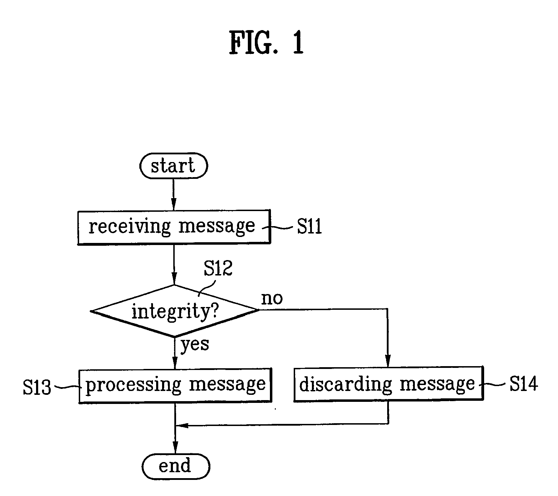

FIG. 1 illustrates a flowchart of a general message processing method.

Referring to FIG. 1, UE (user equipment) firstly receives a general message (S11) and then carries out integrity check on it (S12). In accordance with a result of the integrity check, the message is normally processed or discarded. Namely, if the message passes the integrity check, it is normally processed (S13). If the message fails to pass the integrity check, it is discarded since there exists a security problem (S14).

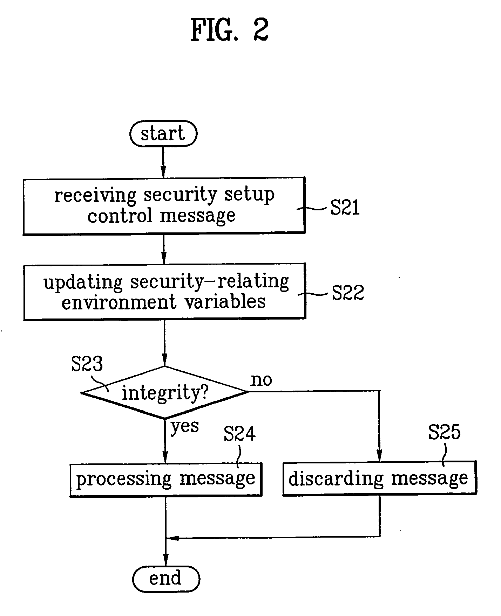

FIG. 2 illustrates a flowchart of a method for processing a security setup control message according to a first embodiment of the present invention.

Referring to FIG. 2, UE (user equipment) receives a security setup control message (S21). And, security-relating environment variables are updated using security-relating environment setup information contained in the received security setup control message (S22). The UE (ex. terminal) carries out security check on the security setup control message itself using the updated security-relating environment variables (S23). The security check includes integrity check. If the security setup control message passes the integrity check, the message is normally processed (S24). Yet, if the security setup control message fails to pass the integrity check, the message is judged as abnormal so that the received security setup control message is discarded (S25). Moreover, it is unable to rely on the security-relating environment setup information included in the security setup control message. Hence, it is unable to use the security-relating environment setup information.

In the first embodiment of the present invention, once a receiving party receives the security setup control message, the previously set security-relating environment variables are updated with the security-relating environment setup information included in the message, and the previous security-relating environment variables are discarded. Hence, the security-relating environment variables of the receiving party do not coincide with those of a transmitting party anymore, it is unable to further exchange messages, and the receiving party cannot be provided with further requested services.

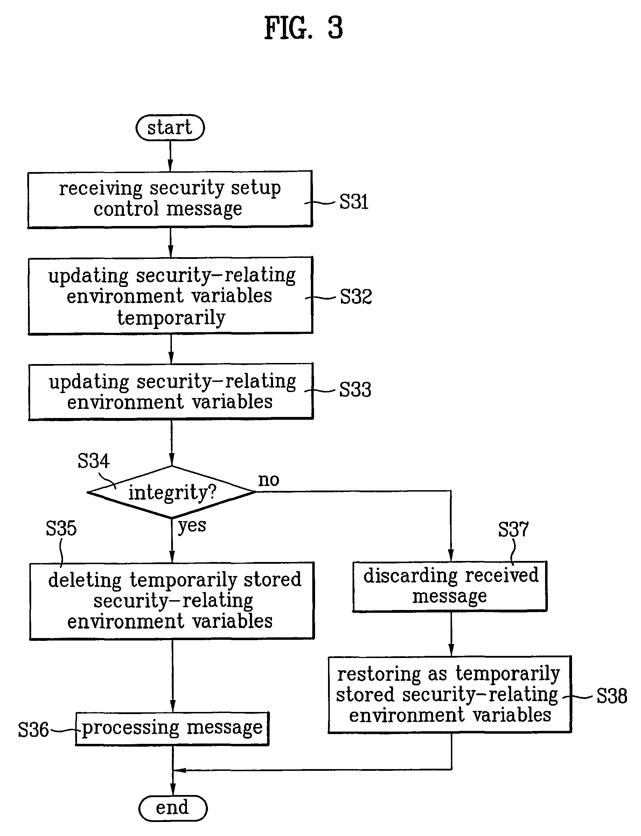

FIG. 3 illustrates a flowchart of a method for processing a security setup control message according to a second embodiment of the present invention.

Referring to FIG. 3, a method for processing a security setup control message is carried out in a following manner. First of all, UE (user equipment) receives a security setup control message (S31). Before the UE carries out security check on the security setup control message itself, security-relating environment variables which were previously set are temporarily stored (S32). And, the security-relating environment variables are updated using security-relating environment setup information included in the received security setup control message (S33).

The UE (ex. terminal) carries out security check on the security setup control message itself using the updated security-relating environment variables (S34). And, the security check includes integrity check. If the security setup control message passes a result of the integrity check, the temporarily stored security-relating environment variables are deleted (S35). Thereafter, security check is carried out on messages received later using the updated security-relating environment variables and the message is normally processed (S36).

However, if the security setup control message fails to pass the integrity check, it is handled such that the security setup control message is not received. Namely, if it is judged that the message is abnormal, the received security setup control message is discarded (S37). Moreover, the security-relating environment setup information included in the security setup control message cannot be used since it is not reliable. Thus, in case that the security setup control message is unable to pass the security check, the security setup control message is discarded as well as the temporarily stored security-relating environment variables are restored (S38). And, messages received later are processed using the restored security-relating environment variables.

In accordance with the second embodiment of the present invention, even if the message of which contents are changed in the middle of transmission from the UTRAN to UE is received, or even if the security setup control message provided from an unauthenticated party is received, it is able to maintain the security-relating environment variables to be equal to those of the terminal using the previously set security-relating environment variables by storing and restoring them. Hence, if the security-relating environment setup variables are deleted instead of being stored, it is able to prevent the case that the message cannot be processed later due to the difference between the security-relating environment variables of the UE and the UTRAN.

A method of performing the integrity check is explained in detail as follows. For such explanation, parameters required for performing the integrity check are explained. In order to perform the integrity check, required are such parameters as IK (integrity key), COUNT-1, MESSAGE, DIRECTION (direction identifier, 1bit), and FRESH.

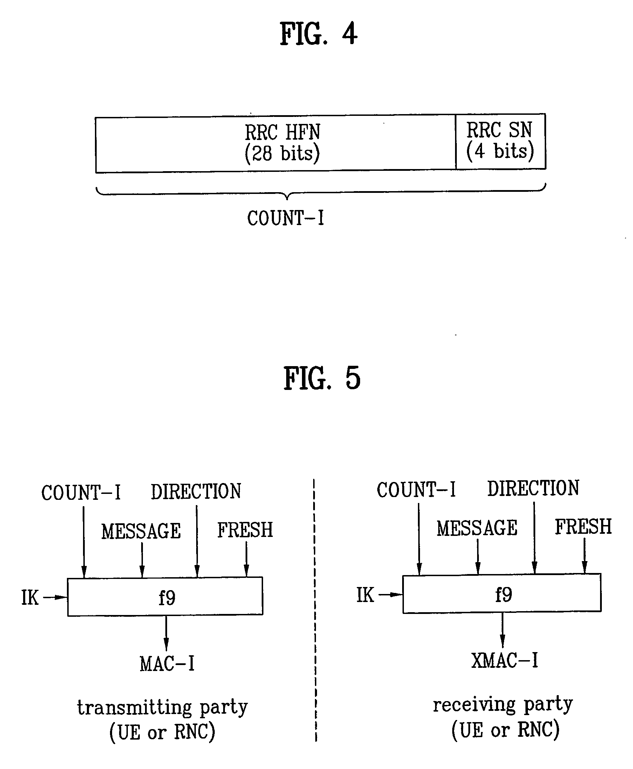

FIG. 4 illustrates a diagram of one embodiment representing COUNT-1 in security-relating environment variables.

COUNT-I is one of security-relating environment variables. Namely, the COUNT-I is a value corresponding to a sequence number for integrity check.

Referring to FIG. 4, the COUNT-I includes a pair of areas. One area of the two includes RRC HFN (hyper frame number) of 28 bits, while the other area of the two includes RRC SN (sequence number) of 4 bits.

A procedure of updating the security-relating environment variables is carried out in a manner that HFN as a value of upper 28 bits of the COUNT-I is reset. Namely, the reset HFN may be a START value transmitted recently by a terminal, 0, or a specific value. And, UE carries out security check on the received security setup control message using the updated security-relating environment variables.

The IK among the parameters for performing the integrity check indicates an integrity key, which is generated from an authentication procedure in an upper layer of the RRC layer to have the RRC layer be informed of. A value of the IK is not transmitted via a radio interface, but the upper layer of the RRC layer in the terminal and a network (ex. UTRAN) calculate values of the IK to use based on specific input values, respectively.

A value of the START is read from an SIM card when the terminal initiates connection between RRC layers of the UTRAN and the terminal, and is transmitted to the UTRAN. The value of the START, which is included in a message transmitted from the upper layer of the RRC layer of the terminal, may be transmitted to the UTRAN. While the connection between the RRC layers of the UTRAN and terminal is activated, the value of the START is defined as the greatest number of upper 20 bits of the currently used values of the COUNT-I or COUNT-C (which is used for ciphering and plays a role similar to the COUNT-1). And the value of the START currently used between the RRC layers of the terminal and UTRAN is stored in the SIM card when the connection between the RRC layers of the terminal and UTRAN ends.

The MESSAGE means a message which is transmitted itself. The DIRECTION is a direction discriminator and its value varies in accordance with uplink or downlink. The DIRECTION can be set as '0' or '1' on uplink or downlink. The FRESH is a value given to each terminal independently, and is a value that UTRAN transmits to UE on an initial state of the RRC connection. Namely, the value of the FRESH is an arbitrary number that UTRAN transmits to UE, which is for securing the security of the UTRAN from the terminal reusing the values of the COUNT-I and MAC-I in a manner that UTRAN provides UE with a new value every RRC connection. A value of the MAC-I (message authentication code-I) is a message authentication code calculated using UIA (UMTS integrity algorithm) with security-relating environment values, which is an integrity checksum inserted in RRC PDU.

If there is no procedure of updating the value of the FRESH, a security invader easily makes the security of UTRAN vulnerable by requesting that the value of the START that will be used as an upper value of the COUNT-I should be set into a very small value when new connection between RRC layers is requested and then by using a pair of vales of the SN and MAC-I which was used for the previous connection between the RRC layers. Yet, such vulnerability of the security can be prevented by assigning a new value of the FRESH in UTRAN whenever the connection between RRC layers is newly established.

FIG. 5 illustrates a diagram for explaining one embodiment of generating an authentication value in integrity check, in which 'f9' is a standardized integrity check authentication generation algorithm adopted by 3GPP.

Referring to FIG. 5, UTRAN and terminal use values of the parameters as input values, thereby generating values of MAC-I and XMAC-I using such an algorithm as 'f9'. The MAC-I is an integrity check authentication value generated from the UTRAN, and the XMAC-I is an integrity check authentication value generated from the terminal. If all input values of the UTRAN and terminal are equal to each other, the values of the MAC-I and XMAC-I generated from the procedure of FIG. 3 will be equal to each other. Yet, if the message is changed in the middle of processing, input values of MESSAGE of receiving and transmitting parties are different from each other so that the value of the XMAC-I is not equal to that of the MAC-I.

Hence, if the values of the MAC-I and XMAC-I are not equal to each other as a result of comparison, the terminal judges that contents of the received security setup control message are intentionally changed during transmission or that the received security setup control message is transmitted from an unauthenticated party. In such a case, the security setup control message is judged as invalid, thereby failing to pass the integrity check. UTRAN changes a portion of the input values used for the procedure in FIG. 3 whenever sending a new message. And, the UTRAN generates a new MAC-I each time using the partial change of input values. This is performed to prevent that an unauthorized party reuses the value of the MAC-I to pass the integrity check.

For this, the UTRAN increases the SN value of the COUNT-I by increment of '1' whenever sending a message. As mentioned in the foregoing description, the SN value constructs lower 4 bits of the COUNT-I. Being 4 bits, the SN value can have values ranging between 0~15 and sequentially increases by '1' from '0'. Once the SN value becomes '15', the next SN value becomes '0' and then increases by the increment of '1' again. Thus, HFN corresponding to upper value of the COUNT-1 value is increased by '1' whenever the SN becomes back to '0' from '15'.

Hence, such a method brings about the effect that the COUNT-I increases by '1' each time, whereby the input values are changed in part in a ciphering authentication value calculation procedure.

Meanwhile, if the terminal recognizes the SN value of the received message and judges that the SN value has completed one cycle, the terminal increases its HFN value by '1'. Thus, the COUNT-I can coincide with that of the transmitting party. If such a method is used, the terminal and UTRAN can have the same COUNT-I information even if SN information is sent only. Besides, security information leakage, which may occur when the entire COUNT-I is sent, to a third party can be prevented. Hence, UTRAN enables the receiving party to accurately calculate the XMAC-I value as well as adds the SN value as lower value of the COUNT-I to the message of each message transmission to prevent the unauthorized third party from passing the integrity check. And, the MAC-I value, which will be used as a reference for the terminal to perform the integrity check, is added to the message to transmit.

Once UE receives the security setup control message, it is necessary to perform the security check of the SN value. For this, UE manages its local parameter SN only using the SN values received so far. If the SN value transmitted together with the security setup control message is equal to the local parameter SN value of the terminal, it can be assumed that a third party sends the message using the same security information of the transmitting party or that the same message is transmitted again from the authenticated UTRAN. In such a case, the terminal immediately discards the security setup control message.

The terminal configures COUNT-I using the SN value received together with the security setup control message and calculates XMAC-I using the parameters set previously in COUNT-I and UE. The parameters set previously in UE include MESSAGE, DIRECTION, FRESH.

By comparing the MAC-I value transmitted together with the security setup control message to the XMAC-I value calculated by UE, the UE performs the integrity check of the security setup control message.

Once the received security setup control message passes the integrity check, the receiving party stores the SN value included in the message in the local parameter SN and uses it for the SN value check of the next message.

### Industrial Applicability

Accordingly, the method as claimed in claim 1 is implemented as a program and can be stored in recording media (CD ROM, floppy disk, hard disk, optical magnetic disk, etc.) as a form that can be read by computer. Such a process is apparent to those skilled in the art, whereby its explanation is skipped in this description.

## Claims

1. A method for processing by a user equipment, UE, a security message in a mobile communication system, the method comprising:
receiving (S21, S31) the security message;
updating (S22, S33) security variables based on the received security message;
performing (S23, S34) an integrity check algorithm by generating an expected authentication value using the updated security variables and by comparing the expected authentication value to a received authentication code received together with the security message;
the method **characterized by** comprising:
restoring (S38) security variables set before the updating step if the received security message does not pass the integrity check, thereby discarding (S25, S37) the updated security variables.

2. The method of claim 1, wherein the security message is a RRC radio resource control by a user equipment UE, discarding (S25, S37) the updated security variables, message.

3. The method of claim 1, wherein the security message is a signaling message.

4. The method of claim 1, further comprising:
storing (S32) the security variables temporarily before the updating step.

5. The method of claim 4, further comprising:
deleting (S35) the security variables stored temporarily if the received security message passes the integrity check.

## Patentansprüche

1. Verfahren zum Verarbeiten einer Sicherheitsnachricht durch ein Anwendergerät, UE, in einem Mobilkommunikationssystem, wobei das Verfahren umfasst:
Empfangen (S21, S31) der Sicherheitsnachricht;
Aktualisieren (S22, S23) von Sicherheitsvariablen anhand der empfangenen Sicherheitsnachricht;
Ausführen (S23, S34) eines Integritätsprüfungsalgorithmus durch Erzeugen eines erwarteten Authentifizierungswerts unter Verwendung der aktualisierten Sicherheitsvariablen und durch Vergleichen des erwarteten Authentifizierungswerts mit einem empfangenen Authentifizierungscode, der zusammen mit der Sicherheitsnachricht empfangen wird;
wobei das Verfahren **gekennzeichnet ist durch**:
Wiederherstellen (S38) von Sicherheitsvariablen, die vor dem Aktualisierungsschritt eingestellt worden sind, falls die empfangene Sicherheitsnachricht die Integritätsprüfung nicht besteht, wodurch die aktualisierten Sicherheitsvariablen verworfen (S25, S37) werden.

2. Verfahren nach Anspruch 1, wobei die Sicherheitsnachricht eine Funkbetriebsmittelsteuerungs-Nachricht, RRC-Nachricht, ist.

3. Verfahren nach Anspruch 1, wobei die Sicherheitsnachricht eine Signalgebungsnachricht ist.

4. Verfahren nach Anspruch 1, das ferner umfasst:
temporäres Speichern (S32) der Sicherheitsvariablen vor dem Aktualisierungsschritt.

5. Verfahren nach Anspruch 4, das ferner umfasst:
Löschen (S35) der temporär gespeicherten Sicherheitsvariablen, falls die empfangene Sicherheitsnachricht die Integritätsprüfung besteht.

## Revendications

1. Procédé de traitement, par un équipement d'utilisateur, UE, d'un message de sécurité dans un système de communication mobile, le procédé comprenant :
la réception (S21, S31) du message de sécurité ;
la mise à jour (S22, S33) de variables de sécurité sur la base du message de sécurité reçu ;
l'exécution (S23, S34) d'un algorithme de contrôle d'intégrité par la génération d'une valeur d'authentification prévue en utilisant les variables de sécurité mises à jour et par la comparaison de la valeur d'authentification prévue à un code d'authentification reçu qui est reçu avec le message de sécurité ;
le procédé étant **caractérisé en ce qu'**il comprend :
la restauration (S38) de variables de sécurité réglées avant l'étape de mise à jour si le message de sécurité reçu ne passe pas le contrôle d'intégrité, et de ce fait le rejet (S25, S37) des variables de sécurité mises à jour.

2. Procédé selon la revendication 1, dans lequel le message de sécurité est un message de commande de ressources radio, RRC.

3. Procédé selon la revendication 1, dans lequel le message de sécurité est un message de signalisation.

4. Procédé selon la revendication 1, comprenant en outre :
le stockage (S32) des variables de sécurité temporairement avant l'étape de mise à jour.

5. Procédé selon la revendication 4, comprenant en outre :
la suppression (S35) des variables de sécurité stockées temporairement si le message de sécurité reçu passe le contrôle d'intégrité.
